(19) Europäisches Patentamt
European Patent Office
Office européen des brevets

(11) Veröffentlichungsnummer: **0 283 687 B1**

# (12) EUROPÄISCHE PATENTSCHRIFT

(45) Veröffentlichungstag der Patentschrift: **27.11.91**

(51) Int. Cl.5: **G01B 7/03**

(21) Anmeldenummer: **88101738.8**

(22) Anmeldetag: **06.02.88**

## (54) Positionsmessvorrichtung.

(30) Priorität: **13.03.87 DE 3708104**

(43) Veröffentlichungstag der Anmeldung:
**28.09.88 Patentblatt 88/39**

(45) Bekanntmachung des Hinweises auf die Patenterteilung:
**27.11.91 Patentblatt 91/48**

(84) Benannte Vertragsstaaten:
**AT CH DE FR GB IT LI**

(56) Entgegenhaltungen:
**DE-A- 3 309 780**
**DE-A- 3 425 612**
**DE-C- 1 013 880**
**GB-A- 2 095 840**
**US-A- 4 492 922**

(73) Patentinhaber: **ROBERT BOSCH GMBH**
**Postfach 50**
**W-7000 Stuttgart 1(DE)**

(72) Erfinder: **Möllendorf, Manfred, Dr.**
**Hoffmannstrasse 94**
**W-7250 Leonberg(DE)**
Erfinder: **Gölzer, Thomas, Dr.**
**Gartenstrasse 20**
**W-7141 Schwieberdingen(DE)**

**EP 0 283 687 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Stand der Technik

Die Erfindung geht aus von einer gattungsgemäßen Vorrichtung zur berührungslosen Positionsmessung. Aus der DE-PS 32 44 891 ist ein derartiges Positionsmeßgerät bekannt. An einem beweglichen oder ruhenden, der Positionsbestimmung unterworfenen Teil ist in einem elektromagnetischen Wechselfeld ein einen Verbraucher darstellendes oder Feldlinien aussendendes Element als Positionsindikator vorgesehen. Diesem Element ist ein Sensorenträger räumlich benachbart zugeordnet, der eine Mehrzahl elektrisch voneinander getrennten, nebeneinander angeordneten Sensoren aufweist. Es ist eine Abfrage- und Auswerteeinheit vorgesehen, mit der jeder der Sensoren zwecks Feststellung seines von der Position des ortveränderlichen oder ruhenden Positionsindikators abhängigen Ausgangssignals über eine Multiplexeinrichtung verbindbar ist. Mit der bekannten Sensoranordnung können eindimensionale Messungen vorgenommen werden.

Weiterhin ist aus der DE-OS 33 09 780 eine Einrichtung zur Bestimmung des Ortes bzw. der Ortsänderung eines Lagegebers beschrieben. Es ist eine Vorrichtung mit vier Sensoren gleicher Charakteristik vorgesehen, die in den vier Eckpunkten eines ebenen Rechtecks unter gegenseitig gleicher geometrischer Ausrichtung angeordnet sind. Ferner ist eine Auswerteschaltung vorgesehen, mit der die X-, Y- und Z-Koordinate des Lagegebers ermittelt wird. Diese zur elektrischen Schwerpunktbestimmung bekannte Meßeinrichtung ist ungeeignet zur Positionsmessung bei großen Flächen mit gleichzeitig hoher Auflösung.

Vorteile der Erfindung

Die erfindungsgemäße Vorrichtung zur berührungslosen Positionsmessung wie in den Ansprüchen 1, 2, 4 und 7 definiert weist den Vorteil auf, daß die Positionsbestimmung eines Positionsgebers bezüglich einer beliebig großen Fläche bei hohem Auflösungsvermögen mit einfachen Mitteln möglich ist.

In einem ersten Ausführungsbeispiel ist einem Positionsindikator eine Detektionsvorrichtung zugeordnet, deren Sensoren in einer Fläche derart angeordnet sind, daß jeweils vier Sensoren an den Eckpunkten von wenigstens vier in der Fläche liegenden, regelmäßigen Vierecken angeordnet sind.

In einem zweiten Ausführungsbeispiel sind jeweils vier Sensoren im Mittenbereich der Umfangslinien von wenigstens vier in der Fläche liegenden, regelmäßigen Vierecken angeordnet.

In einem dritten Ausführungsbeispiel ist einem Positionsindikator eine Detektionsvorrichtung zugeordnet, deren Sensoren in einer Fläche derart angeordnet sind, daß parallel zu den beiden Koordinatenrichtungen des der Fläche zugrundeliegenden Koordinantensystems jeweils eine Sensorreihe liegt, die mehr als zwei Sensoren aufweist.

In einem vierten Ausführungsbeispiel sind mehr als zwei Sensoren auf jeder der vier Umfangslinien wenigstens eines in der Fläche liegenden Vierecks angeordnet.

Ein hohes Signal zu Rauschverhältnis der Meßvorrichtung und somit eine einfache Auswertung der von den Sensoren abgegebenen Signale ist gegeben, wenn als Positionsindikator ein Permanentmagnet und als Sensoren magnetoresistive Elemente verwendet werden. Anstelle des Permanentmagneten kann auch ein Elektromagnet eingesetzt werden.

Die magnetoresistiven Elemente weisen im allgemeinen eine Vormagnetisierung auf, damit ein definiertes Nullsignal hysteresefrei erhalten wird. Vorteilhaft ist es, wenn die Richtung der Vormagnetisierung der einzelnen Sensoren in der Sensoranordnung bestimmte Richtungen aufweisen. Beim ersten und zweiten Ausführungsbeispiel liegen die Richtungen der Vormagnetisierungsfelder der auf den Umfangslinien der Vierecke angeordneten, magnetoresistiven Sensoren vorteilhafter Weise parallel zur Richtung der Umfangslinien. Im ersten Ausführungsbeispiel, bei dem die Sensoren an den Eckpunkten der Vierecke liegen, ist zusätzlich festgelegt, daß die Richtungen der Vormagnetisierungsfelder bei sich diagonal gegenüberliegenden Sensoren parallel ausgerichtet sind. Beim dritten Ausführungsbeispiel liegen die Richtungen der Vormagnetisierungsfelder der beiden Sensorreihen vorzugsweise senkrecht in bezug auf die den einzelnen Sensoren zugeordnete Koordinate. Beim vierten Ausführungsbeispiel liegen die Richtungen der Vormagnetisierungsfelder der auf den Umfangslinien der Vierecke angeordneten, magnetoresistiven Sensoren vorzugsweise senkrecht zur Richtung der Viereck-Umfangslinien.

Durch die besondere Anordnung der Sensoren und Richtungsfestlegung der Vormagnetisierungsfelder beim dritten und vierten Ausführungsbeispiel wird eine Ummagnetisierung der Magnetschichten vermieden. da sich der Magnet im dritten Ausführungsbeispiel stets nur auf einer bestimmten Seite aller Sensoren befindet und im vierten Ausführungsbeispiel die Sensoren nur des Vierecks zur Positionsbestimmung herangezogen werden, über dem sich der Magnet befindet, womit sich der Magnet ebenfalls nur auf einer bestimmten Seite aller relevanten Sensoren befindet.

Ein der Detektionsvorrichtung zugeordneter Temperatursensor ermöglicht eine dreidimensionale Positionsauswertung des Positionsindikators bezüglich der Detektionsvorrichtung in einer signalverarbeitenden Anordnung, da der Abstand des Positionsindikators von der Detektionsvorrichtung (Z-Koordinate) in dem temperaturabhängigen Ausgangssignal der Einzelsensoren enthalten ist.

Ferner ist es von Vorteil, wenn ein spezieller Sensor vorgesehen ist, der als Kalibriersensor arbeitet. Dieser Sensor stellt zunächst eine Anfahrposition für den Positionsindikator dar von der aus die Detektionsanordnung überprüft werden kann.

Das berührungslos und somit weitgehend verschleißfrei arbeitende Positionsmeßgerät ist in der Lage die Position des Positionsindikators bezüglich einer beliebig großen Fläche mit einer Auflösung im Mikrometerbereich und darunter mit einer hohen Arbeitsgeschwindigkeit zu bestimmen.

Die Herstellung der gesamten Detektionsvorrichtung als ein einziges Bauteil in Dünnschichttechnologie führt zu einem preisgünstigen Meßgerät, das in Handhabungsgeräten, Werkzeugmaschinen und im Kraftfahrzeugsektor mit seinen hohen Produktionszahlen Presvorteile ergibt.

Weitere Einzelheiten und vorteilhafte Weiterbildungen des erfindungsgemäßen Positionsmeßvorrichtung ergeben sich aus weiteren Unteransprüchen in Verbindung mit der folgenden Beschreibung.

## Zeichnung

Die Figuren 1 bis 4 zeigen vier Ausführungsbeispiele einer erfindungsgemäßen Positionsmeßvorrichtung.

## Beschreibung der Ausführungsbeispiele .

Figur 1 zeigt einen Permanentmagneten 10, der zu einer Detektionsvorrichtung 12 einen bestimmten Abstand 14 aufweist. Der Abstand 14 ist das im Punkt 15 errichtete Lot auf einer Fläche 11. Die Detektionsvorrichtung 12 wird gebildet von magnetoresistiven Elementen 16, 18, 20, 22, die in der Fläche 11 mit einer bestimmten geometrischen Ausrichtung zueinander angeordnet sind. Die Fläche ist festgelegt durch ein X-Y-Koordinatensystem 24, 26. Zur räumlichen Positionsbestimmung des Permanentmagneten 10 ist neben der X- und Y-Koordinate 24, 26 eine Z-Koordinate 28 erforderlich. Dem Abstand 14 des Permanentmagneten 10, den ein Magnetfeld 38 mit einer X-, Y- und Z-Komponente 40, 42, 44 umgibt, von der Fläche 11 entspricht dann ein bestimmter Wert in Z-Richtung. Die Detektionsvorrichtung 12 weist weiterhin einen Kalibriersensor 30 sowie einen Temperatursensor 32 auf. Die elektrischen Anschlüsse aller Sensoren 16, 18, 20, 22, 30, 32 sind zugunsten einer übersichtlicheren Darstellung in der Detektionsvorrichtung 12 nicht eingezeichnet. Mit dem Bezugszeichen 34 sind die Verbindungsleitungen zwischen einer signalverarbeitenden Anordnung 36 und aller Sensoren der Detektionsvorrichtung 12 versehen. Die signalverarbeitende Anordnung 36 kann auf der Fläche 11 oder deren Rückseite untergebracht sein.

Die vier Sensoren 16, 18, 20, 22 liegen an den Eckpunkten eines in der Fläche 11 liegenden Vierecks 46. Das Viereck 46 ist beispielsweise ein Reckteck oder, als bevorzugte Ausführungsform, ein Quadrat. Die quadratische Anordnung ergibt einen regelmäßigen Aufbau der gesamten Detektionsvorrichtung 12 und ermöglicht eine einfache Auswertung der Meßsignale. In der Detektionsvorrichtung 12 sind wenigstens vier solcher Vierecke 46 vorgesehen. Prinzipiell ist die Detektionsfläche 11 durch Hinzunahme weiterer Sensoren beliebig vergrößerbar.

Der Abstand zwischen benachbarten Sensoren ist in bestimmten Grenzen variierbar. Eine untere Abstandsgrenze ist gegeben durch die physikalische Ausdehnung der einzelnen Sensoren, die bei Dünnschichtelementen derzeit im Mikrometerbereich liegt. Eine obere Grenze des Abstandes zwischen zwei Sensoren ist gegeben durch die Meßempfindlichkeit der Sensoren bezüglich des Magnetfeldes 38 des Permanentmagneten 10 und des maximal zulässigen Meßfehlers, da eine Position des Magneten 10 zwischen zwei Sensoren mit einem Rechenverfahren in der signalverarbeitenden Anordnung 36 angenähert werden muß. Mit einem Abstand zwischen zwei Sensoren im Millimeterbereich läßt sich eine Auflösung im Mikrometerbereich erreichen.

Ein Betrieb der magnetoresistiven Elemente 16, 18, 20, 22 ohne Vormagnetisierung ist unzweckmäßig. Der elektrische Nullpunkt (ohne Magnetfeld 38) ist nicht exakt reproduzierbar, da Hystereseeffekte auftreten; auch sind die Widerstandsänderungen durch das Magnetfeld 38, auf denen der Meßeffekt beruht, nicht optimal. Diese Nachteile werden behoben, indem man eine magnetische Vorzugsrichtung im ferromagnetischen Sensormaterial erzeugt. Dieser Ausrichtungsvorgang kann bereits Bestandteil des Fertigungsprozesses sein. Eine andere Möglichkeit zur Erzeugung des Vormagnetisierungsfeldes besteht in der Anbringung kleiner Permanentmagneten, beispielsweise unter der Detektionsvorrichtung 12. Ferner kann auch schon der zur Erfassung der Widerstandsänderung erforderliche Meßstrom in den Sensoren 16, 18, 20, 22 zur Erzeugung des Vormagnetisierungsfeldes ausreichen. Die Richtungen der Vormagnetisierungsfelder 48, 50, 52, 54 der vier Sensoren 16, 18, 20, 22 sind in Figur 1 eingezeichnet. Sie sind parallel zu den Richtungen der Umfangslinien 55, 56, 57, 58. Die Richtungen der Vormagnetisierungsfelder von sich diagonal gegenüberliegenden Sensoren 16, 22 und 18, 20 sind zueinander parallel.

Die beiden Sensoren 16 und 22 detektieren die Y-Komponente 42 und die beiden Sensoren 18 und 20 die X-Komponente 40 des vom Permanentmagneten 10 ausgehenden Magnetfeldes 38. Vorteilhaft ist es, wenn die X- und die Y-Komponente 40, 42 des Magnetfeldes 38 bei jeder Position des Permanentmagneten 10 bezüglich der Detektionsvorrichtung 12 nicht zu einer Umdrehung der Richtung der Vormagnetisierungsfelder 48, 50, 52, 54 der Sensoren 16, 18, 20, 22 führt. Eine Ummagnetisierung hätte eine Hysterese in der Kennlinie der Sensoren zur Folge, die jedoch, allerdings unter Zeitaufwand, in der signalverarbeitenden Anordnung 36 berücksichtigt werden kann. Eine Positionsbestimmung des als Positionsindikator verwendeten Permanentmagneten 10 bezüglich der Detektionsvorrichtung 12 erfolgt in der signalverarbeitenden Anordnung 36 nach dem bekannten Schwerpunktberechnungsverfahren. Für eine grobe Positionsbestimmung kann es zunächst erforderlich sein, nicht nur die zu einem Viereck 46 gehörenden vier Sensoren zur Positionsbestimmung heranzuziehen, sondern ein größeres Suchnetz vorzugeben. Ein Übergang zu einer genauen Positionsmessung ist mit einer Intervallschachtelung möglich. Eine definierte Startposition ist dann vorgebbar, wenn der Kalibriersensor 30 vorgesehen ist. Nach Inbetriebnahme des Positionsmeßvorrichtung stellt der Kalibriersensor 30 eine Anfahrposition dar.

Eine Bestimmung des Abstandes 14 zwischen dem Permanentmagneten 10 und der Detektionsvorrichtung 12 ist beispielsweise durch eine Absolutwertauswertung der von den Sensoren . 16, 18, 20, 22 abgegebenen Signalen möglich. Da der magnetoresistive Effekt temperaturabhängig ist, erhöht ein der Detektionsvorrichtung 12 zugeordneter Temperatursensor 32 die Meßgenauigkeit. Der Temperatursensor 32 muß einen guten Wärmekontakt zu den Sensoren der Detektionsvorrichtung 12 aufweisen. Bei großflächigen Detektionsvorrichtungen 12 kann es zweckmäßig sein, mehrere Temperatursensoren vorzusehen.

In Figur 2 ist ein zweites Ausführungsbeispiel der Detektionsvorrichtung 12 gezeigt, bei dem jeweils vier Sensoren 60, 62, 64, 66 im Mittenbereich der Umfangslinien von wenigstens vier in der Detektionsfläche 11 liegenden Vierecken 68 angeordnet sind. Ein Viereck ist in der Figur 2 eingezeichnet und mit dem Bezugszeichen 68 versehen. Den Sensoren 60, 62, 64, 66 liegt der magnetoresistive Effekt zugrunde. Besonders vorteilhaft ist es auch hier, wenn die Richtung der Vormagnetisierungsfelder 71, 72, 73, 74 der Sensoren 60, 62, 64, 66 parallel zur Richtung der Umfangslinien 75, 76, 77, 78 des Vierecks 68 liegen. Ebenso wie im ersten Ausfuhrungsbeispiel gemäß Figur 1 können auch im zweiten Ausführungsbeispiel gemäß Figur 2 ein oder mehrere Temperatursensoren in der Fläche 11 vorgesehen sein.

Der Vorteil der Detektionsvorrichtung 12 gemäß Figur 2, bei der die Sensoren im Mittenbereich der Umfangslinien liegen, gegenüber der Anordnung gemäß Figur 1, bei der die Sensoren an den Ecken eines Vierecks liegen, liegt darin, daß ein geringerer Seitenversatz des Magnetfeldes 38 bezüglich der Sensoren der Detektionsvorrichtung 12 auftritt. Der Seitenversatz entsteht folgendermaßen: Der Sensor 60 detektiert beispielsweise die Y-Komponente 42 des Magnetfeldes 38 des über dem Punkt 15 stehenden Permanentmagneten 10. Verschiebt sich der Punkt 15 bei festgehaltenem Wert in X-Richtung 24 im Viereck 68, so durchläuft das Ausgangssignal des Sensors 60, der die Y-Komponente 42 des Magnetfeldes 38 detektiert, ein Maximum, ausgehend von und endend mit einem bestimmten Wert. Die Differenz zwischen dem Maximalwert und dem bestimmten Wert ist in der Anordnung gemäß Figur 2 geringer als in der Anordnung gemäß Figur 1, da der Versatz des Punkts 15 bezüglich eines der Sensoren 60, 62, 64, 66 maximal die Hälfte der Ausdehnungen des Vierecks 68 in X-Richtung 24 bzw. Y-Richtung 26, in Figur 1 dagegen die gesamte Ausdehnung des Vierecks 46 in X-Richtung 24 bzw. Y-Richtung 26 betragen kann.

Figur 3 zeigt ein drittes Ausführungsbeispel der erfindungsgemäßen Positionsmeßvorrichtung. Sie zeigt einen Permanentmagneten 80, der zu einer Detektionsvorrichtung 82 einen bestimmten Abstand 84 aufweist. Der Abstand 84 ist das im Punkt 88 errichtete Lot auf einer Fläche 86 . Die Detektionsvorrichtung 82 wird gebildet von magnetoresistiven Elementen 90, 92, 94, 96, die in der Fläche 86 mit einer bestimmten geometrischen Ausrichtung zueinander angeordnet sind. Die Fläche 86 ist festgelegt durch ein X-Y-Koordinatensystem 98, 100. Zur eindeutigen dreidimensionalen Positionsbestimmung des Permanentmagneten 80 ist neben der X- und Y-Koordinate 98, 100 eine Z-Koordinate 102 erforderlich. Das Koordinatensystem ist nicht auf ein kartesisches Koordinatensystem eingeschränkt. Dem Abstand 84 des Permanentmagneten 80, den ein Magnetfeld 104 mit einer X-, Y- und Z-Komponente 106, 108, 110 umgibt, von der Fläche 86 entspricht dann ein bestimmter Wert auf der Z-Koordinate 102. Die Detektonsvorrichtung 82 weist weiterhin einen Kalibriersensor 112 sowie einen Temperatursensor 114 auf. Die elektrischen Anschlüsse aller Sensoren 90, 92, 94, 96, 112, 114 sind zugunsten einer übersichtlicheren Darstellung in der Detektionsvorrichtung 82 nicht eingezeichnet. Mit dem Bezugszeichen 116 sind die Verbindungsleitungen zwischen einer signalverarbeitenden Anordnung 118 und aller Sensoren der Detektionsvorrichtung 82 versehen. Die signalverarbeitende Anordnung 118 kann auf der Fläche 86 oder deren Rückseite untergebracht sein.

Auf der Detektionsfläche 86 ist eine erste Sensorreihe 120 und eine zweite Sensorreihe 121 vorgesehen, die wenigstens jeweils zwei Sensoren 90, 92 bzw. 94, 96 aufweisen. Die erste Sensorreihe 120 ist näherungsweise parallel zur X-Koordinate 98 und die zweite Sensorreihe 121 ist näherungsweise parallel zur Y-Koordinate 100 des die Fläche definierenden X-Y-Koordinatensystems 98, 100, dessen X-Koordinate 98 und Y-Koordinate 100 einen beliebigen Winkel miteinander bilden können. Die beiden Sensorreihen 120, 121 sind derart angeordnet, daß sie eine sensorfreie Fläche 122 begrenzen, oberhalb der sich der Permanentmagnet 80 befindet.

Prinzipiell ist die Detektionsfläche durch Hinzunahme weiterer Sensoren beliebig vergrößerbar. Auch der Abstand zwischen benachbarten Sensoren ist in bestimmen Grenzen variierbar. Eine untere Abstandsgrenze ist wiedergegeben durch die physikalische Ausdehnung der einzelnen Sensoren, die bei Dünnschichtelementen derzeit im Mikrometerbereich liegt. Eine obere Grenze des Abstandes zwischen zwei Sensoren ist wiedergegeben durch die Meßempfindlichkeit der Sensoren bezüglich des Magnetfeldes 98 des Permanentmagneten 80 und des maximal zulässigen Meßfehlers, da eine Position des Permanentmagnetetn 80 zwischen zwei Sensoren auch in diesem Ausführungsbeispiel mit einem Rechenverfahren in der signalverarbeitenden Anordnung 118 angenähert werden muß. Mit einem Abstand zwischen zwei Sensoren im Millimeterbereich läßt sich derzeit noch eine Auflösung im Mikrometerbereich erreichen.

Da den Sensoren 90, 92, 94, 96 wieder der magnetoresistive Effekt zugrundeliegt, bei dem eine Widerstandsänderung der Sensoren unter Einwirkung eines magnetischen Feldes auftritt, ist ein Betrieb ohne Vormagnetisierung der Sensoren unzweckmäßig. Die Richtungen der Vormagnetisierungsfelder 123, 124 der Sensoren 90, 92 der ersten, zur X-Richtung 98 parallelen Sensorreihe 120 liegen näherungsweise senkrecht zu der X-Koordinate 98 und die Richtungen der Vormagnetisierungsfelder 125, 126 der Sensoren 94, 96 der zweiten, zur Y-Richtung 100 parallelen Sensorreihe 121 liegen näherungsweise senkrecht zur Y-Koordinate 100.

Die Orientierung der Vormagnetisierungsfelder 123, 124, 125, 126 kann auf zwei Arten erfolgen. Eine erste Möglichkeit besteht darin, die Orientierung so zu wählen, daß das Magnetfeld 104 des Permanentmagneten 80 in jeder möglichen Magnetposition über der freien Fläche 122 die Vormagnetisierungsfelder 123, 124, 125, 126 verstärkt. Eine zweite Möglichkeit besteht in der entgegengesetzten Orientierung, die zu einer Abschwächung der Felder 123, 124, 125, 126 führt. Wesentlich ist es, daß das Magnetfeld 104 des Permanentmagneten 80 keinesfalls ein Umkippen der Vormagnetisierungsfelder 123, 124, 125, 126 bewirken kann. Dies ist auch bei der zweiten Möglichkeit der Feldorientierung gewährleistet, wenn die maximal auftretenden Magnetfeldkomponenten 106, 108, 110 und die Stärke der Vormagnetisierungsfelder 123, 124, 125, 126 unter Berücksichtigung der geometrischen Gegebenheiten aufeinander abgestimmt sind. Mit der Verhinderung der Umdrehung werden Hystereseeffekte in den Sensoren 90, 92, 94, 96 vermieden. Die Auswertezeit des Meßergebnisses in der signalverarbeitenden Anordnung 118 erfolgt schneller, da die Hysterese nicht berücksichtigt werden muß.

In einem vierten Ausführungsbeispiel der erfindungsgemäßen Postionsmeßvorrichtung gemäß Figur 4 sind mehr als zwei Sensoren 130, 131 bzw. 132, 133 bzw. 134, 135 bzw. 136, 137 auf jeder der vier strichliniert gezeichneten Umfangslinien 138, 139, 140, 141 wenigstens eines in der Fläche 146 liegenden Vierecks 142 angeordnet. Die Vierecke können als Rechtecke, insbesondere Quadrate, ausgebildet sein. Die Sensoren 130 bzw. 137, die wieder magnetoresistive Elemente sind, begrenzen eine sensorfreie Fläche 143. Die beiden Umfangslinien 138, 140 des Vierecks 142 liegen näherungsweise parallel zur X-Koordinate 98 und die beiden Umfangslinien 139, 141 liegen näherungsweise parallel zur Y-Koordinate 100 des der Fläche 146 zugrundeliegenden X-Y-Koordinatensystems, das nicht auf ein kartesisches Koodinatensystem eingeschränkt ist. Die Richtungen der Vormagnetisierungsfelder 145, 146, 149, 150 der Sensoren 130, 131, 134, 135 auf den beiden Umfangslinien 138, 140 des Vierecks 142 liegen näherungsweise parallel zur Y-Koordinate 100. Die Richtungen der Vormagnetisierungsfelder 147, 148, 151, 152 der Sensoren 132, 133, 136, 137 auf den beiden Umfangslinien 139, 141 des Vierecks 142 liegen näherungsweise parallel zur X-Koordinate 158. Die Detektionsvorrichtung 142 gemäß Figur 4 stellt eine Erweiterung der Anordnung gemäß Figur 3 zur Abdeckung einer größeren Fläche hin dar. Eine Richtungsänderung der Vormagnetisierungsfelder 145 bis 152 kann hier lediglich bei dem Übergang des über der Detektionsvorrichtung 142 befindlichen, hier nicht gezeigten Permanentmagneten von einer Position, beispielsweise der freien Fläche 143 des Vierecks 142 über in die Fläche eines der benachbarten Vierecke 153, 154, 155 auftreten. Diese Übergänge werden jedoch in der signalverarbeitenden Anordnung 118 leicht erkannt und können entsprechend berücksichtigt werden.

Eine definierte Startposition ist dann vorgebbar, wenn der Kalibriersensor 112 vorgesehen ist. Nach Inbetriebnahme des Positionsmeßgerätes stellt der Kalibriersensor 112 eine Anfahrposition dar.

Eine Bestimmung des Abstandes 84 zwischen dem Permanentmagneten 80 und der Detektionsvorrichtung 82 ist beispielsweise durch eine Absolutwertauswertung der von den Sensoren 90, 92, 94, 96, 130 bis 137 abgegebenen Signalen möglich. Da der magnetoresistive Effekt temperaturabhängig ist, erhöht ein der Detektionsvorrichtung 82 zugeordneter Temperatursensor 94 die Meßgenauigkeit. Der Temperatursensor 94 muß einen guten Wärmekontakt zu den Sensoren der Detektionsvorrichtung 82 aufweisen. Bei großflächigen Detektionsvorrichtungen 82 kann es zweckmäßig sein, mehrere Temperatursensoren vorzusehen. In Figur 4 ist der Temperatursensor aus Übersichtlichkeitsgründen nicht eingezeichnet.

In einer anderen Ausführungsform der Positionsmeßvorrichtung 12, 82, die bei großen Flächen 11, 86 eine höhere Arbeitsgeschwindigkeit ermöglicht, sind mehrere Permanentmagnete 10, 80 vorgesehen, die mit einer entsprechend größeren Detektonsfläche 11, 86 zusammenwirken.

In einer weiteren Ausführungsform der erfindungsgemäßen Positionsmeßvorrichtung kann anstelle des Permanentmagneten 10, 80 ein Elektromagnet verwendet werden.

Die Detektionsvorrichtung 12, 82 wird vorteilhafter Weise als ein einziges Bauelement in Dünnschichttechnologie hergestellt. Der Temperatursensor 32, 114 kann ebenfalls in Dünnschichttechnologie hergestellt werden.

## Patentansprüche

**1.** Vorrichtung zur berührungslosen Positionsmessung mit den Merkmalen:
- an einem bewegbaren Teil, dessen Position bestimmt werden soll, ist wenigstens ein Magnet (10) als Positionsindikator vorgesehen,
- dem Magneten (10) ist eine Detektionsvorrichtung (12) zugeordnet, - die Sensoren der Detektionsvorrichtung (12) sind in einer Fläche (11) angeordnete magnetoresistive Elemente,
- die Fläche (11) liegt in einer durch ein X-Y-Koordinatensystem (24, 26) aufgespannten Ebene,
- jeweils vier Sensoren (16, 18, 20, 22) sind an den Eckpunkten von wenigstens vier in der Fläche (11) liegenden Vierekken (46) angeordnet und
- die Sensoren (16, 18, 20, 22) geben an eine informationsverarbeitende Anordnung (36) Signale ab.

**2.** Vorrichtung zur berührungslosen Positionsmessung mit den Merkmalen:
- an einem bewegbaren Teil, dessen Position bestimmt werden soll, ist wenigstens ein Magnet (10) als Positionsindikator vorgesehen,
- dem Magneten (10) ist eine Detektionsvorrichtung (12) zugeordnet,
- die Sensoren der Detektionsvorrichtung (12) sind in einer Fläche (11) angeordnete magnetoresistive Elemente,
- die Fläche (11) liegt in einer durch ein X-Y-Koordinatensystem (24, 26) aufgespannten Ebene,
- jeweils vier Sensoren (60, 62, 64, 66) sind im Mittenbereich der Umfangslinien (75, 76, 77, 78) von wenigstens vier in der Fläche (11) liegenden Vierecken (68) angeordnet und
- die Sensoren (60, 62, 64, 66) geben an eine informationsverarbeitende Anordnung (36) Signale ab, die von der Position des Magneten (10) abhängen.

**3.** Vorrichtung nach Anspruch 1 oder 2, dadurch gekennzeichnet, daß die Richtung eines Vormagnetisierungsfeldes (48, 50, 52, 54, 71, 72, 73, 74) der auf den Umfangslinien (55, 56, 57, 58, 75, 76, 77, 78) der Vierecke (46, 68) angeordneten Sensoren (16 18, 20, 22, 60, 62, 64, 66) parallel zu den Richtungen der Umfangslinien (55, 56, 57, 58, 75, 76, 77, 78) ist.

**4.** Vorrichtung zur berührungslosen Positionsmessung mit den Merkmalen:
- an einem bewegbaren Teil, dessen Position bestimmt werden soll, ist wenigstens ein Magnet (80) als Positionsindikator vorgesehen,
- dem Magneten (80) ist eine Detektionsvorrichtung (82) zugeordnet,
- die Sensoren der Detektionsvorrichtung (82) sind in einer Fläche (86) angeordnete magnetoresistive Elemente,
- die Fläche (11) liegt in einer durch ein X-Y-Koordinatensystem (98, 100) aufgespannten Ebene,
- wenigstens zwei Sensoren (130 bis 137) sind auf jeder der vier Umfangslinien (138 bis 141) wenigstens eines in der Fläche (86) liegenden Vierecks (143, 153, 154, 155) angeordnet
- wobei jeder Sensor (130, 131; 132, 133; 134, 135; 136, 137) gleichzeitig nur einer Umfangslinie (138 bis 141) zugeordnet ist und
- die Sensoren (130 bis 137) geben an eine informationsverarbeitende Anordnung (118) Signale ab, die von der Position des Magneten (80) abhängen.

**5.** Vorrichtung nach Anspruch 4, dadurch gekennzeichnet, daß die Richtungen der Vormagnetisierungsfelder (145 bis 152) der auf den Umfangslinien (138 bis 141) der Vierecke (142, 153, 154, 155) angeordneten Sensoren (130 bis 137) mit den Umfangslinien (138 bis 141) einen Winkel von etwa 90° bilden.

**6.** Vorrichtung nach einem der vorhergehenden Ansprüche, dadurch gekennzeichnet, daß die Vierecke (46, 68, 143, 153, 154, 155) als Quadrate ausgebildet sind.

**7.** Vorrichtung zur berührungslosen Positionsmessung mit den Merkmalen:
- an einem bewegbaren Teil, dessen Position bestimmt werden soll, ist wenigstens ein Magnet (80) als Positionsindikator vorgesehen,
- dem Magneten (80) ist eine Detektionsvorrichtung (82) zugeordnet,
- die Sensoren der Detektionsvorrichtung (82) sind in einer Fläche (86) angeordnete magnetoresistive Elemente,
- die Fläche (11) liegt in einer durch ein X-Y-Koordinatensystem (98, 100) aufgespannten Ebene,
- parallel zu den beiden Koordinatenrichtungen (98, 100) des die Fläche (86) definierenden Koordinatensystems liegt jeweils wenigstens eine Sensorreihe (120, 121), die wenigstens zwei Sensoren (90, 92, 94, 96) enthält und
- die Sensoren (90, 92, 94, 96) geben an eine informationsverarbeitende Anordnung (118) Signale ab, die von der Position des Magneten (80) abhängen.

**8.** Vorrichtung nach Anspruch 7, dadurch gekennzeichnet, daß die Richtungen der Vormagnetisierungsfelder (123, 124) der magnetoresistiven Sensoren (90, 92) der zur X-Koordinatenrichtung (98) parallel liegenden ersten Sensorreihe (120) mit der X-Koordinatenrichtung (98) einen Winkel von etwa 90° bilden und daß die Richtungen der Vormagnetisierungsfelder (125, 126) der magnetoresistiven Sensoren (94, 96) der zur Y-Koordinatenrichtung (100) parallel liegenden zweiten Sensorreihe (121) mit der Y-Koordinatenrichtung (100) einen Winkel von etwa 90° bilden.

**9.** Vorrichtung nach einem der vorhergehenden Ansprüche, dadurch gekennzeichnet, daß der Detektionsvorrichtung (12, 82) wenigstens ein Temperatursensor (32, 114) zugeordnet ist, der ein Signal an die signalverarbeitende Anordnung (36, 118) abgibt.

**10.** Vorrichtung nach Anspruch 9, dadurch gekennzeichnet, daß der Temperatursensor (32, 114) auf der Fläche (11, 86) der Detektionsvorrichtung (12, 82) angeordnet ist.

**11.** Vorrichtung nach einem der vorhergehenden Ansprüche, dadurch gekennzeichnet, daß wenigstens ein magnetoresistiver Sensor (90, 114) als Kalibriersensor auf der Fläche (11, 86) der Detektionsvorrichtung (12, 82) angeordnet ist.

**12.** Vorrichtung nach einem der vorhergehenden Ansprüche, dadurch gekennzeichnet, daß die Detektionsvorrichtung (12, 82) als ein Bauteil in Dünnschichttechnologie aufgebaut ist.

**13.** Vorrichtung nach einem der vorhergehenden Ansprüche, dadurch gekennzeichnet, daß die Detektionsvorrichtung (12, 82) und wenigstens Teile der signalverarbeitenden Anordnung (96, 118) als ein Bauteil in Dünnschichttechnologie aufgebaut sind.

## Claims

**1.** Device for contactless position measurement having the features:
- at least one magnet (10) is provided as the position indicator on a movable part whose position is to be determined,
- a detection device (12) is assigned to the magnet (10),
- the sensors of the detection device (12) are magnetoresistive elements arranged in a surface (11),
- the surface (11) lies in a plane covered by an X-Y coordinate system (24, 26),
- in each case four sensors (16, 18, 20, 22) are arranged at the corner points of at least four quadrilaterals (46) lying in the surface (11), and
- the sensors (16, 18, 20, 22) transmit signals to an information-processing arrangement (36).

**2.** Device for contactless position measurement having the features:
- at least one magnet (10) is provided as the position indicator on a movable part whose position is to be determined,
- a detection device (12) is assigned to the magnet (10),
- the sensors of the detection device (12) are magnetoresistive elements arranged in a surface (11),
- the surface (11) lies in a plane covered by an X-Y coordinate system (24, 26),
- in each case four sensors (60, 62, 64, 66) are arranged in the central region of the peripheral lines (75, 76, 77, 78) of at least four quadrilaterals (63) lying in the surface (11), and
- the sensors (60, 62, 64, 66) transmit signals to an information-processing arrangement (36) which depend on the position of the magnet (10).

**3.** Device according to Claim 1 or 2, characterised in that the direction of a polarising field (48, 50, 52, 54, 71, 72, 73, 74) of the sensors (16, 18, 20, 22, 60, 62, 64, 66) arranged on the peripheral lines (55, 56, 57, 58, 75, 76, 77, 78) of the quadrilaterals (46, 68) is parallel to the directions of the peripheral lines (55, 56, 57, 58, 75, 76, 77, 78).

**4.** Device for contactless position measurement having the features:
- at least one magnet (80) is provided as the position indicator on a movable part whose position is to be determined,
- a detection device (82) is assigned to the magnet (80),
- the sensors of the detection device (82) are magnetoresistive elements arranged in a surface (86),
- the surface (11) lies in a plane covered by an X-Y coordinate system (98, 100),
- at least two sensors (130 to 137) are arranged on each of the four peripheral lines (138 to 141) of at least one quadrilateral (143, 153, 154, 155) lying in the surface (86),
- each sensor (130, 131; 132, 133; 134, 135; 136, 137) being assigned simultaneously only to one peripheral line (138 to 141), and
- the sensors (130 to 137) transmitting to an information-processing arrangement (118) signals which depend on the position of the magnet (80).

**5.** Device according to Claim 4, characterised in that the directions of the polarising fields (145 to 152) of the sensors (130 to 137) arranged on the peripheral lines (138 to 141) of the quadrilaterals (142, 153, 154, 155) form an angle of approximately 90° with the peripheral lines (138 to 141).

**6.** Device according to one of the preceding claims, characterised in that the quadrilaterals (46, 68, 143, 153, 154, 155) are constructed as squares.

**7.** Device for contactless position measurement having the features:
- at least one magnet (80) is provided as the position indicator on a movable part whose position is to be determined,
- a detection device (82) is assigned to the magnet (80),
- the sensors of the detection device (82) are magnetoresistive elements arranged in a surface (86),
- the surface (11) lies in a plane covered by an X-Y coordinate system (98, 100),
- in each case at least one row of sensors (120, 121) which contains at least two sensors (90, 92, 94, 96) lies parallel to the two coordinate directions (98, 100) of the coordinate system defining the surface (86), and
- the sensors (90, 92, 94, 96) transmit to an information-processing arrangement (118) signals which depend on the position of the magnet (80).

**8.** Device according to Claim 7, characterised in that the directions of the polarising fields (123, 124) of the magnetoresistive sensors (90, 92) of the first row of sensors (120), lying parallel to the X-coordinate direction (98), form an angle of approximately 90° with the X-coordinate direction (98), and in that the directions of the polarising fields (125, 126) of the magnetoresistive sensors (94, 96) of the second row of sensors (121), parallel to the Y-coordinate direction (100), form an angle of approximately 90° with the Y-coordinate direction (100).

**9.** Device according to one of the preceding claims, characterised in that the detection device (12, 82) is assigned at least one temperature sensor (32, 114) which transmits a signal to the signal-processing arrangement (36, 118).

**10.** Device according to Claim 9, characterised in that the temperature sensor (32, 114) is arranged on the surface (11, 86) of the detection device (12, 82).

**11.** Device according to one of the preceding claims, characterised in that at least one magnetoresistive sensor (90, 114) is arranged as a calibration sensor on the surface (11, 86) of the detection device (12, 82).

**12.** Device according to one of the preceding claims, characterised in that the detection device (12, 82) is constructed as one component using thin-film technology.

**13.** Device according to one of the preceding claims, characterised in that the detection device (12, 82) and at least parts of the signal-processing arrangement (96, 118) are constructed as one component using thin-film technology.

**Revendications**

**1.** Dispositif pour la mesure sans contact de la position avec les caractéristiques suivantes :
- sur une partie mobile, dont la position doit être déterminée, il est prévu au moins un aimant (10) jouant le rôle d'indicateur de position.
- à l'aimant (10) est associé un dispositif de détection (12),
- les détecteurs du dispositif de détection (12) sont des éléments magnétorésistifs disposés sur une surface (11),
- la surface (11) est dans un plan défini par un système de coordonnées X-Y (24, 26),
- respectivement quatre détecteurs (16, 18, 20, 22) sont disposés aux points d'angle d'au moins quatre quadrilatères (46) se situant sur la surface (11),
- les détecteurs (16, 18, 20, 22) délivrent des signaux à un agencement (36) de traitement de l'information.

**2.** Dispositif pour la mesure sans contact de la position avec les caractéristiques suivantes :
- sur une partie mobile, dont la position doit être déterminée, il est prévu au moins un aimant (10) jouant le rôle d'indicateur de position,
- à l'aimant (10) est associé un dispositif de détection (12),
- les détecteurs du dispositif de détection (12) sont des éléments magnétorésistifs disposés sur une surface (11),
- la surface (11) est dans un plan défini par un système de coordonnées X-Y (24, 26),
- respectivement quatre détecteurs (60, 62, 64, 66) sont disposés dans la zone médiane des lignes périphériques (75, 76, 77, 78) d'au moins quatre quadrilatères (68) se situant sur la surface (11),
- les détecteurs (60, 62, 64, 66) délivrent à un agencement de traitement de l'information (36) des signaux qui dépendent de la position de l'aimant (10).

**3.** Dispositif selon la revendication 1 ou la revendication 2, caractérisé en ce que la direction d'un champ de prémagnétisation (48, 50, 52, 54, 71, 72, 73, 74) des détecteurs (16, 18; 20, 22, 60, 62, 64, 66) disposés sur les lignes périphériques (55, 56, 57, 58, 75, 76, 77, 78) des quadrilatères (46, 48) est parallèle aux directions des lignes périphériques (55, 56, 57, 58, 75, 76, 77, 78).

**4.** Dispositif pour la mesure sans contact de la position avec les caractéristiques suivantes :
- sur une partie mobile, dont la position doit être déterminée, il est prévu au moins un aimant (80) jouant le rôle d'indicateur de position,
- à l'aimant (80) est associé un dispositif de détection (82),
- les détecteurs du dispositif de détection (82) sont des éléments magnétorésistifs disposés sur une surface (86),
- la surface (86) est dans un plan défini par un système de coordonnées X-Y (98, 100),
- au moins deux détecteurs (130 à 137) sont disposés sur chacune des quatre lignes périphériques (138 à 141) d'au moins un quadrilatère (143, 153, 154, 155) se situant sur la surface (86),
- chaque détecteur (130, 131; 132, 133; 134, 135; 136, 137) est simultanément associé à une ligne périphérique (138 à 141),
- les détecteurs (130 à 137) délivrent à un agencement (118) de traitement de l'information des signaux qui dépendent de la position de l'aimant (80).

**5.** Dispositif selon la revendication 4, caractérisé en ce que les directions des champs de prémagnétisation (145 à 152) des détecteurs (130 à 137) disposés sur les lignes périphériques (138 à 141) des quadrilatères (142, 153, 154, 155) forment avec les lignes périphériques (138 à 141) un angle d'environ 90°.

**6.** Dispositif selon une des précédentes revendications, caractérisé en ce que les quadrilatères (46, 68, 143, 153, 154, 155) sont des carrés.

**7.** Dispositif pour la mesure sans contact de la position avec les caractéristiques suivantes :
- sur une partie mobile, dont la position doit être déterminée, il est prévu au moins un aimant (80) jouant le rôle d'indicateur de position,

- à l'aimant (80) est associé un dispositif de détection (82),
- les détecteurs du dispositif de détection (82) sont des éléments magnétorésistifs disposés sur une surface (86),
- la surface (86) est dans un plan défini par un système de coordonnées X - Y (98, 100)
- parallèlement aux deux directions de coordonnées (98, 100) du système de coordonnées définissant la surface (86) est respectivement placée une rangée (120, 121) de détecteurs qui comprend au moins deux détecteurs (90, 92, 94, 96),
- les détecteurs (90, 92, 94, 96) délivrent à un agencement de traitement de signaux (118) des signaux qui dépendent de la position de l'aimant (80).

**8.** Dispositif selon la revendication 7, caractérisé en ce que les directions des champs de prémagnétisation (123, 124) des détecteurs magnétorésistifs (90, 92) de la première rangée (120) de détecteurs parallèle à la direction des coordonnées X (98) forment avec cette direction de coordonnées X (98) un angle d'environ 90°, et en ce que les directions des champs de prémagnétisation (125, 126) des détecteurs magnétorésistifs (94, 96) de la seconde rangée (121) de détecteurs parallèle à la direction des coordonnées Y (100) forment avec cette direction des coordonnées Y (100) un angle d'environ 90°.

**9.** Dispositif selon une des précédentes revendications, caractérisé en ce qu'au dispositif de détection (12, 82) est associé au moins un détecteur de température (32, 114) qui délivre un signal à l'agencement de traitement de signaux (36, 118).

**10.** Dispositif selon la revendication 9, caractérisé en ce que le détecteur de température (32, 114) est disposé sur la surface (11, 86) du dispositif de détection (12, 82).

**11.** Dispositif selon une des précédentes revendications, caractérisé en ce qu'au moins un détecteur magnétorésistif (90, 114) est disposé, en tant que détecteur de calibrage, sur la surface (11, 86) du dispositif de détection (12, 82).

**12.** Dispositif selon une des précédentes revendications, caractérisé en ce que le dispositif de détection (12, 82) est réalisé sous la forme d'une partie constitutive selon la technologie des couches minces.

**13.** Dispositif selon une des précédentes revendications, caractérisé en ce que le dispositif de détection (12, 82) et au moins des parties de l'agencement de traitement de signaux (96, 118) sont réalisés sous la forme d'une pièce constitutive selon la technologie des couches minces.

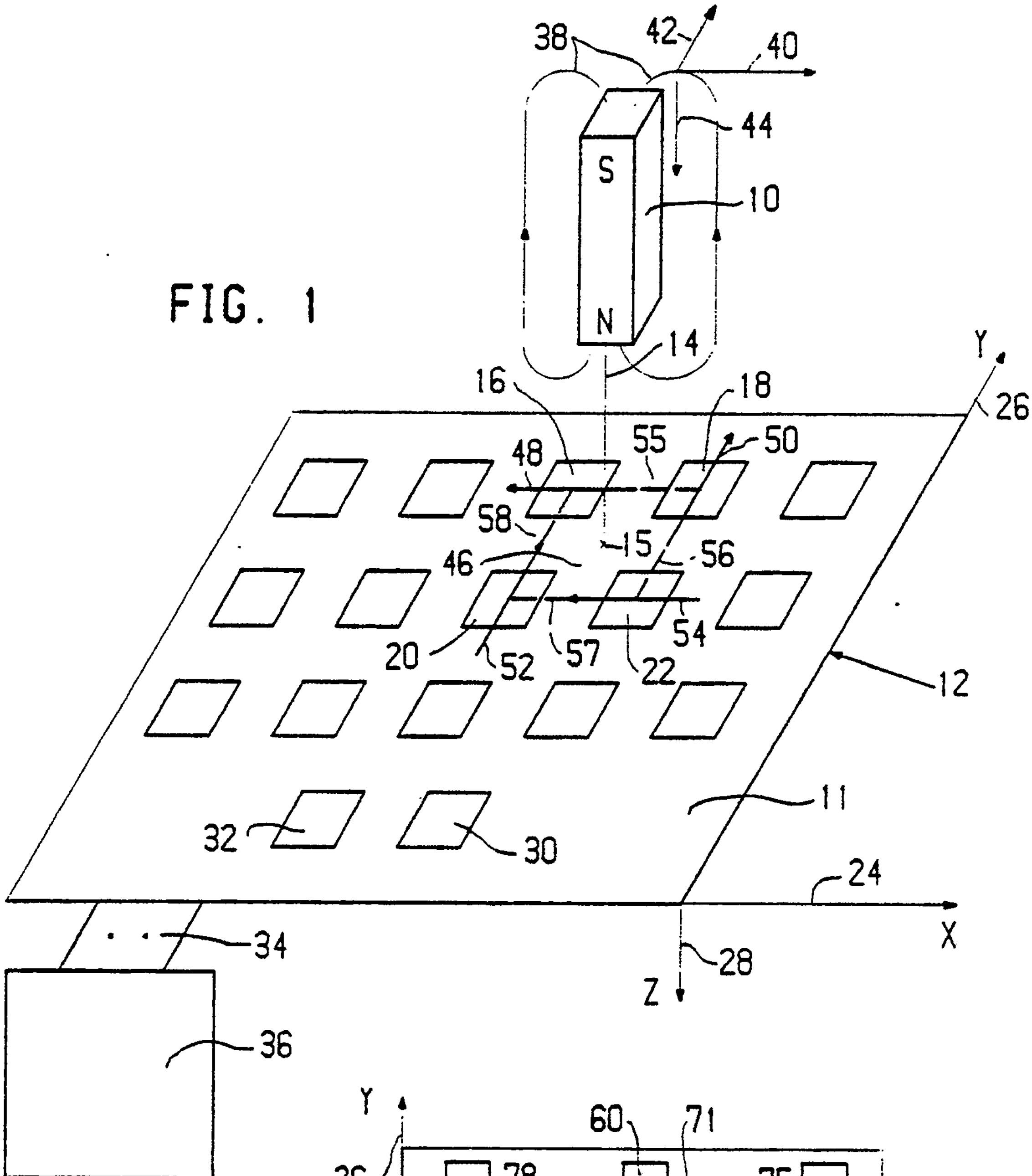
38
42
40
44
S
10
N
14
Y
26
16
18
55
50
48
58
15
56
46
54
20
52
57
22
12
11
32
30
24
X
34
28
Z
36

FIG. 1

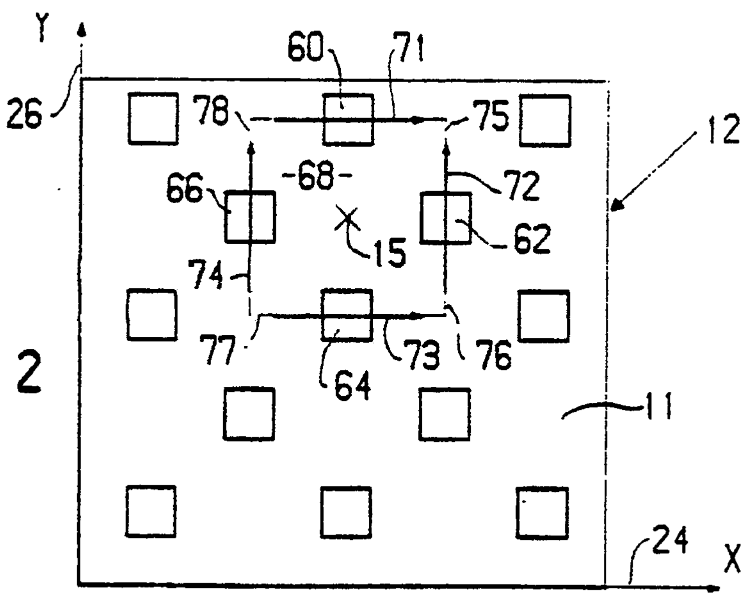
Y
26
60
71
78
75
12
68
66
72
62
15
74
77
64
73
76
11
24
X

FIG. 2

FIG. 3

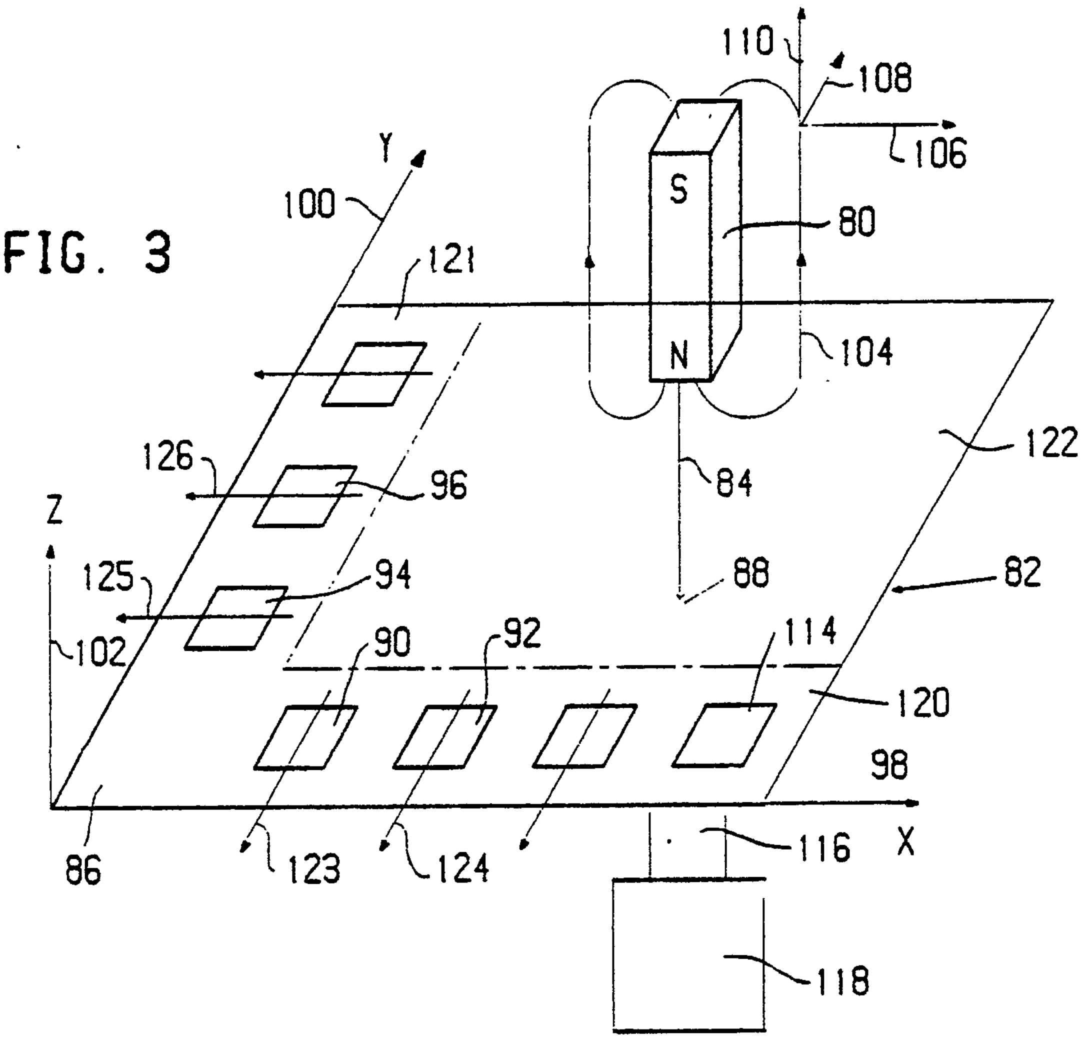
Y
100
121
S
N
80
110
108
106
104
122
126
96
Z
125
94
84
88
82
102
90
92
114
120
98
86
123
124
116
X
118

FIG. 4

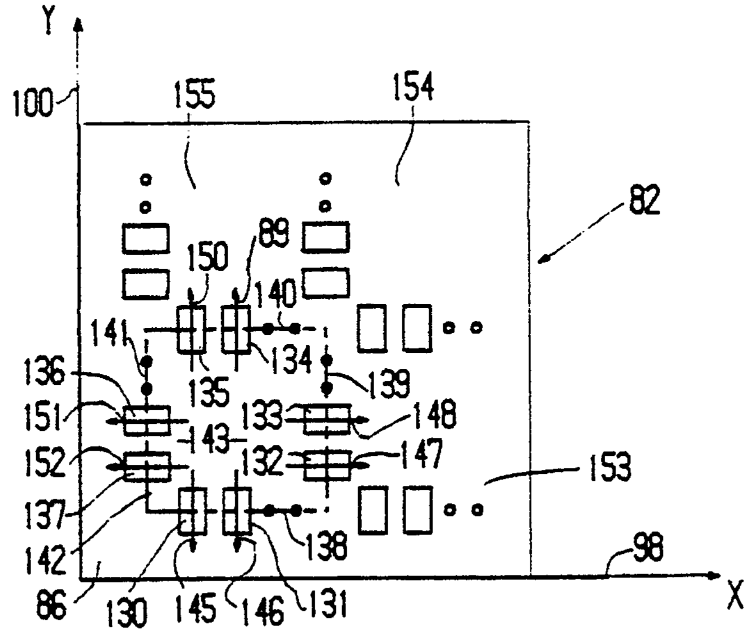
Y
100
155
154
82
89
150
140
141
134
136
135
139
151
133
148
143
152
132
147
153
137
138
142
98
86
130
145
146
131
X